# EUROPEAN PATENT APPLICATION

(11) **EP 1 897 435 A1**
(43) Date of publication of application: **12.03.2008**
(21) Application number: 07115645.9
(22) Date of filing: 04.09.2007
(51) Int. Cl.: A01J 25/16

(54) **Method and system for drying a plurality of cheeses**

(30) Priority: 05.09.2006 NL 1032441
(71) Applicant: Friesland Brands B.V., 7943 PE Meppel (NL)
(72) Inventor: Prij, Roelof, 7948 CJ, Nijeveen (NL)
(74) Representative: Hatzmann, Martin

(57) **Abstract**

A method and system (1) for drying a plurality of cheeses (8.i,j). The method comprises exposing the plurality of cheeses to an air flow (24.i,28.i), for instance generated by means of an air flow supply system (3) for supplying an air flow to the plurality of cheeses, of which a flow direction varies in time during drying of the plurality of cheeses.

## Description

The invention relates to a method for drying a plurality of cheeses comprising supplying an air flow to the plurality of cheeses by means of an air supply system, wherein a flow direction of the air flow varies in time during drying of the plurality of cheeses.

The invention further relates to a system for drying a plurality of cheeses and to an air supply system of the system.

With a traditional method for drying a plurality of cheeses, the plurality of cheeses are stored in a cheese warehouse, for instance on shelves. Ripening of the cheeses involves release of moisture from the cheeses, referred to as drying. Moisture released from a cheese is released to the ambient air via the cheese surface, and possibly to the support on which the cheese is placed. In known methods for drying the plurality of cheeses, an amount of air is circulated around the cheeses and is continuously, for instance by means of air treatment equipment, brought into a desired condition with respect to temperature and relative air humidity.

Such methods have the drawback that the drying of individual cheeses can vary greatly, for instance depending on a position of the cheese in the cheese warehouse. This can result in quality differences between individual ready cheeses. Thus, for instance, the risk is increased that ready cheeses have a gooey rind, or there is an increased risk of molding. The prevention of differences in drying entails extra costs in these methods, for instance in the form of more frequently changing the respective positions of the cheeses within the cheese warehouse.

From FR 2,119,839, a method is known for drying a plurality of cheeses, wherein an air flow is led along the plurality of cheeses by means of an air supply/discharge system, while a flow direction of the air flow can be reversed periodically.

Such a method is also known from US 4,108,056.

However, these known methods have the drawback that the air supply/discharge system used becomes polluted relatively quickly, so that the quality of the air in the air flow supplied to the cheeses decreases, which can adversely affect the quality of the cheeses. It is therefore necessary that the air supply/discharge system is cleaned frequently.

It is an object of the invention to obviate at least one of the above-mentioned drawbacks.

To this end, according to the invention, a method is provided according to claim 1.

Thus, the plurality of cheeses are exposed to the air flow whose flow direction varies in time during drying of the plurality of cheeses, while the air flow is supplied to the plurality of cheeses by means of the air supply system, and while the air flow exposed to the cheeses is discharged via the air discharge system which is separated from the air supply system. This means that the air which has flowed along the plurality of cheeses does not enter the air supply system, but is discharged via the separate air discharge system. Thus, air which has flowed along the plurality of cheeses is prevented from entering the air supply system. This reduces the risk of contamination of the air supply system. This is because the air flow exposed to the cheeses may contain fungi and/or other, for instance microbiological, contaminations, for instance coming from cheese, which could end up in the air supply system if the air supply system also (for instance alternately) served as an air discharge system, so that the air flow to be supplied to the cheeses could become polluted and could actively contaminate or otherwise pollute other cheeses, for instance present elsewhere or present at a later time, for instance with fungal spores. According to the invention, thus, via the air supply system, for instance conditioned and/or cleaned air is supplied to the plurality of cheeses, and air exposed to the cheeses which is possibly polluted is discharged via the separate air discharge system.

For the drying of a cheese, the temperature, relative air humidity and air speed of the air flow to which the cheese is exposed are important. In general, alone or in combination, a higher temperature, a reduced relative air humidity and a higher air speed generate an increased drying.

An air flow flowing along a number of cheeses will experience an air resistance, for instance at the cheeses, so that the air speed will decrease in a flow direction. Further, an air flow flowing along the number of cheeses will take up moisture from the cheeses passed, so that the relative air humidity will increase in the flow direction. Further, as the air flow takes up more moisture, the temperature of the air flow will decrease as a result of the evaporation energy of the moisture taken up. The air flow will therefore obtain a lower air speed, a higher relative air humidity and a lower temperature in the flow direction, all three of which result in a drying decreasing in the flow direction.

Because, according to the invention, the plurality of cheeses are exposed to the air flow whose flow direction varies in time, it is possible to reduce the differences in drying between individual cheeses, since the flow direction, and accordingly the direction in which the drying decreases, is varied.

Thus, for instance, the plurality of cheeses may be exposed to a first air flow during a first period and the plurality of cheeses may be exposed to a second air flow during a second period, the second air flow having an orientation which differs from an orientation of the first air flow. To this end, for instance, a first air supply apparatus may be provided for supplying the first air flow and a second air supply apparatus for supplying the second air flow. Thus, in a simple manner, the flow direction of the air flow to which the plurality of cheeses are exposed is varied.

For instance, the first air flow may be directed substantially oppositely to the second air flow. This offers the advantage that the direction in which the drying decreases during the first period is directed oppositely to the direction in which the drying decreases during the second period. Thus, it is possible that, during the first period, the most downstream cheese, which can thus dry less during the first period than more upstream cheeses, is located most upstream during the second period. Thus, a "lack" of drying during the first period may be compensated during the second period.

Preferably, the plurality of cheeses are alternately exposed to the first and the second air flow, for instance alternately after a number of hours, for instance after six hours. It may thus be achieved that, during a plurality of first and/or second periods, the plurality of cheeses are exposed to the first and second air flow, respectively. As a result, a more uniform drying of the plurality of cheeses can be achieved than when a ripening period, of for instance fourteen days, were divided into a first and second period of seven days each.

According to another aspect of the invention, the air exposed to the plurality of cheeses is discharged by the air discharge system in a direction directed upwards and/or at a location located vertically higher than the plurality of cheeses. This offers the advantage that drying differences in vertical direction are minimized. This is because a normally occurring increase of temperature with increasing vertical height and associated increased drying can, at least partly, be compensated in that the air discharged upwards will obtain a higher relative air humidity with increasing vertical height by passing cheeses located below and taking up moisture therefrom.

Preferably, the plurality of cheeses are received in a movable holder. This makes it simple to supply and discharge the cheeses to and from the location where the cheeses are dried. Preferably, the movable holder is substantially free of front, rear and side walls. As a result, the movable holder does not obstruct the air flow whose flow direction varies in time. In addition, this allows the flow direction to be chosen favorably.

In one embodiment, the plurality of cheeses are placed on a plurality of shelves placed below one another and/or next to one another. This allows drying of a relatively large number of cheeses per square meter.

Preferably, the method comprises supplying an air flow whose flow direction varies in time per shelf. Thus, per shelf, the cheeses are exposed to the air flow whose flow direction varies, so that parameters of the air flow, such as temperature, relative air humidity and speed experienced by the cheeses can be controlled accurately.

In one embodiment, in a row of shelves placed below one another, the flow direction of the air per shelf is, at any moment, substantially equal. In one embodiment, in a row of shelves placed next to one another, a flow direction of the air is, at any moment, substantially opposite on adjacent shelves. This allows differences in drying between individual cheeses to be limited further.

Preferably, the method further comprises discharging air which has flowed along at least one cheese, for instance by means of underpressure. Thus, the air which has flow along at least one cheese disturbs the drying process less.

The invention will be discussed hereinbelow in more detail, by way of non-limiting example, with reference to the drawing, in which:
Fig. 1 shows a schematic representation of a system for drying cheeses according to a first embodiment of the invention;
Fig. 2 shows a second embodiment of a system according to the invention; and
Fig. 3 shows a schematic top plan view of a third embodiment of a system according to the invention.

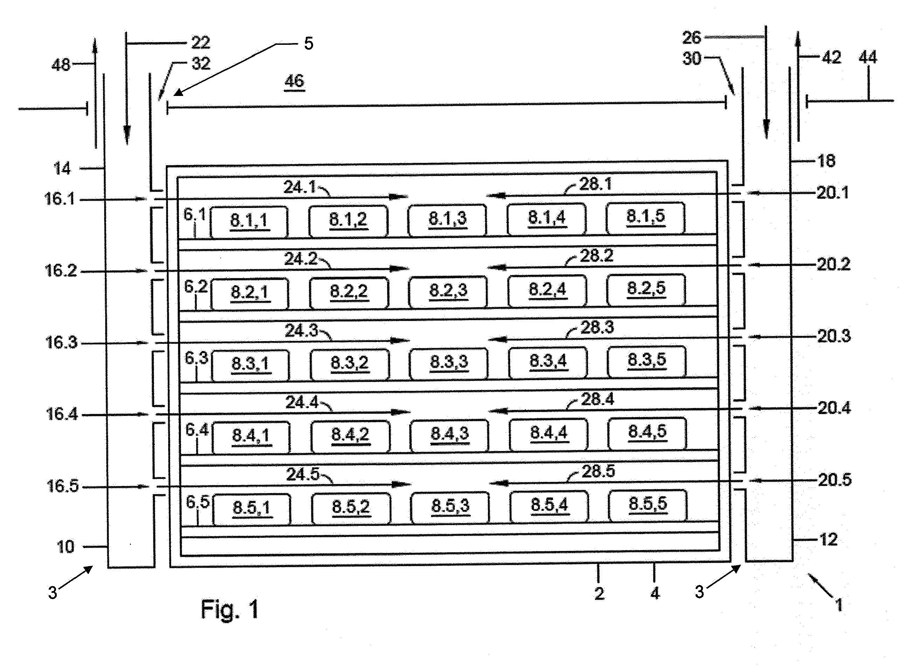

Fig. 1 shows a schematic representation of a system 1 for drying cheeses according to a first embodiment of the invention. In this example, the system 1 comprises a movable holder 2, in this example of the type which is known as a cheese box. In this example, the holder 2 comprises a rack 4 provided with at least one shelf, in this example a plurality of shelves 6.i (i=1,2,3,...). Each shelf 6.i has at least one position where a cheese can be placed. In this example, the holder 2 is provided with a plurality of cheeses 8.i,j (j=1,2,3,...). In this example, each shelf 6.i is provided with a number of cheeses of the plurality of cheeses 8.i,j. In this example, the holder 2 is designed so as to be free of front, side and rear walls. Thus, in the normal operative position of the holder, the cheeses 8.i,j are substantially freely accessible from a front side, rear side, left side and right side, for instance for an air flow to be supplied from outside the holder.

The system 1 is, in Fig. 1, further provided with an air supply system 3. In the example of Fig. 1, the air supply system 3 comprises a first air supply apparatus 10 and a second air supply apparatus 12. In this example, the first air supply apparatus 10 is located on a first side of the shelves 6.i, and the second air supply apparatus 12 is located on a second side of the shelves 6.i located opposite the first side.

In this example, the first air supply apparatus 10 comprises a first standpipe 14 provided with a plurality of first outflow openings 16.i. In this example, the second air supply apparatus 12 comprises a second standpipe 18 provided with a plurality of second outflow openings 20.i. Each standpipe 14,18 may, for instance, be designed as a tube, for instance from plastic. Each first and/or second outflow opening 16.i,20.i may, for instance, be designed as a hole or outflow nozzle. In this example, the first and second air supply apparatus 10,12 are each provided with one outflow opening 16.i,20.i per shelf 6.i.

The system 1 described so far can be used as follows for carrying out a method for drying a plurality of cheeses 8.i,j.

During a first period, in a first operative condition, a first main air flow 22 is supplied to the first air supply apparatus 10. The first main air flow 22 is preferably conditioned, at least with respect to temperature and relative air humidity, and/or controlled, at least with respect to flow speed or flow rate. To this end, the system 1 is, for instance, provided with a first air conditioning / control unit (not shown). In this example, the air flows down through the first standpipe 14, and can leave the first air supply apparatus 10 via the first outflow openings 16.i. Thus, in this example, a plurality of first air flows 24.i are created, here one first air flow 24.i from each first outflow opening 16.i.

In this example, per shelf 16.i, a first air flow 24.i is supplied to the movable holder 2. For, for instance, the first shelf 6.1, this means that the number of cheeses 8.1,j, in this case the five cheeses 8.1,1, 8.1,2, 8.1,3, 8.1,4 and 8.1,5 present on the shelf 6.1 are exposed to the first air flow 24.1. In this example, a row of cheeses 8.1,1-8.1,5 is present on the shelf 6.1. The flow direction of the first air flow 24.1 is, in Fig. 1, directed in a direction in which the row of cheeses extends. As already described hereinabove, the first air flow 24.1 will obtain a lower air speed, a higher relative air humidity and a lower temperature in the flow direction, i.e. in the direction from the cheese 8.1,1 to the cheese 8.1,5. Thus, the ability of the first air flow 24.1 to take up moisture from the cheeses 8.1,j decreases in the flow direction. The drying of the cheeses 8.1,j will therefore decrease in the flow direction. The drying of cheese 8.1,5 will therefore be less than that of cheese 8.1,4, which will be less than that of cheese 8.1,3, which will be less than that of cheese 8.1,2, which will be less than that of cheese 8.1,1. *Mutatis mutandis,* the same holds for the cheeses present on the other shelves 6.2-6.5.

During a second period, in a second operative position, a second main air flow 26 is supplied to the second air supply apparatus 12. The second main air flow 26 is preferably conditioned, at least with respect to temperature and relative air humidity, and/or controlled, at least with respect to flow speed or flow rate. To this end, the system 1 is, for instance, provided with a second air conditioning / control unit (not shown). In this example, the air flows down through the second standpipe 18, and can leave the second air supply apparatus 12 via the second outflow openings 20.i. Thus, in this example, a plurality of second air flows 28.i are created, here one second air flow 28.i from each second outflow opening 20.i. In the example of Fig. 1, the second air flows 28.i are directed substantially oppositely to the first air flows 24.i.

Here, it is noted that, in this example, during the first period, in the first operative condition, the second air flows 28.i are not supplied to the cheeses and, during the second period, in the second operative condition, the first air flows 24.i are not supplied to the cheeses.

In this example, per shelf 6.i, a second air flow 28.i is supplied to the movable holder 2. For, for instance, the first shelf 6.1, this means that the number of cheeses 8.1,j present on the shelf 6.1 are exposed to the second air flow 28.1. The flow direction of the second air flow 28.1 is, in Fig. 1, directed in a direction in which the row of cheeses extends. As already described hereinabove, the second air flow 28.1 will obtain a lower air speed, a higher relative air humidity and a lower temperature in the flow direction, i.e. in the direction from the cheese 8.1,5 to the cheese 8.1,1. Thus, the ability of the second air flow 28.1 to take up moisture from the cheeses 8.1,j decreases in the flow direction. The drying of the cheeses 8.1,j will therefore decrease in the flow direction. The drying of cheese 8.1,5 will therefore be greater than that of cheese 8.1,4, which will be greater than that of cheese 8.1,3, which will be greater than that of cheese 8.1,2, which will be greater than that of cheese 8.1,1. *Mutatis mutandis,* the same holds for the cheeses present on the other shelves 6.2-6.5.

In this example, the cheeses are thus, for instance alternately, exposed to the first and second air flow, in this example directed oppositely. Thus, the cheeses are exposed to the air flow of which a flow direction varies in time during drying of the cheeses. Preferably, the cheeses are alternately exposed to the first air flow for 2-25 hours and exposed to the second air flow for 2-25 hours. More preferably, the cheeses are alternately exposed to the first air flow for 4-8 hours and exposed to the second air flow for 4-8 hours. Most preferably, the cheeses are alternately exposed to the first air flow for substantially 6 hours and exposed to the second air flow for substantially 6 hours. Thus, a homogenous drying of the cheeses is obtained.

Thus by, as described hereinabove, exposing at least the number of cheeses of the plurality of cheeses to the first air flow during the first period and exposing that number of cheeses of the plurality of cheeses to the second air flow during the second period, the drying of the cheeses will be more uniform. Thus, differences in drying between individual cheeses of the plurality of cheeses will be less than when the flow direction of the air flow is not varied in time.

The air supplied to the cheeses 8.i,j may, for instance, be discharged by letting it flow away in the space around the holder 2. The air may also, for instance, be discharged via discharge openings and/or suction openings which are, for instance, located above the holder 2 or above a position located next to the holder, for instance a row aisle.

In the example of Fig. 1, the air can be discharged via at least one suction opening 30,32 of an air discharge system 5. In the example of Fig. 1, on the right side of the holder 2, a first suction opening 30 is provided and, on the left side of the holder 2, a second suction opening 32. The first suction opening 30 is therefore located, in Fig. 1, with respect to the holder 2, on the side opposite the side where the first air supply apparatus 10 is located. The second suction opening 32 is therefore located, in Fig. 1, with respect to the holder 2, on the side opposite the side where the second air supply apparatus 12 is located. Thus, it is possible to discharge the first air flows 24.i, after they have flowed through the holder 2, via the first suction opening 30 and the second air flows 28.i, after they have flowed through the holder 2, via the second suction opening 32.

In the example of Fig. 1, the first suction opening 30 is formed by an opening in a ceiling 44. The first suction opening 30 of the air discharge system 5 is thus located in a vertically higher position than the cheeses 8.i,j. In this example, the opening has such a dimension that a second standpipe 18 can be fed through the opening, and that, next to or around the second standpipe, a first return air flow 42 can flow from the space near the holder 2 to a plenum 46 located above the ceiling 44. The return air flow is thus discharged in upward direction. In this example, the air discharge system 5 is arranged for discharging air exposed to the plurality of cheeses in substantially vertically upward direction after it has flowed through the holder 2. In this example, the plenum 46 is, for instance, at an underpressure with respect to the space around the holder for suctioning in the return air. In a similar manner, in Fig. 1, the second suction opening 32 is formed by an opening in the ceiling through which the first standpipe 14 is fed as well. Next to or around the first standpipe, a second return air flow 48 can flow from the space near the holder 2 to the plenum 46. It will be clear that providing the plenum which, such as in this example, extends above the holder, preferably also beyond the holder, above the ceiling 44, makes it possible to choose the suction openings 30,32 in suitable positions.

In Fig. 1, the first and the second suction opening 30,32 are shown to be substantially higher than the holder 2. As a result, the return air flow 42 is discharged in upward direction. This offers the advantage that drying differences in vertical direction can be minimized. This is because a normally occurring increase of temperature with increasing vertical height and associated increased drying can, at least partly, be compensated in that the air discharged upwards in vertical direction will obtain a higher relative air humidity with increasing vertical height by passing cheeses 8.i,j located below and taking up moisture therefrom. It will be clear that the first and the second suction opening 30,32 may also be placed next to or lower than the holder 2.

It will be clear that, in the example of Fig. 1, the air supply system 3 is separated from the air discharge system 5. Air exposed to the cheeses, such as in the air flows 24.i and 28.i, will therefore be discharged via the separate air discharge system 5, and not enter the air supply apparatuses 10,12. Thus reduces the risk of contamination of the air supply system 3.

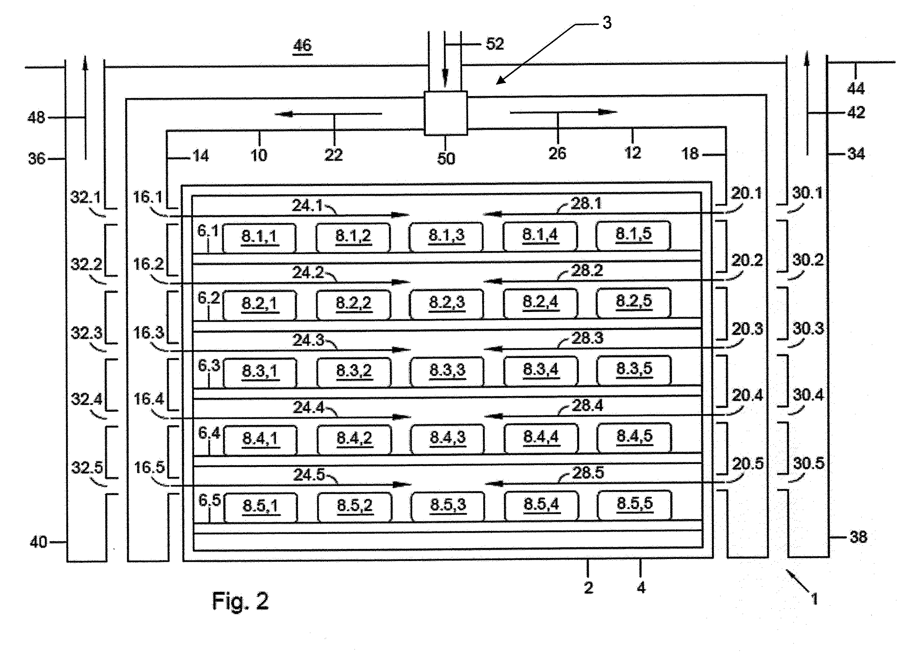

Fig. 2 shows a second embodiment of the system 1 according to the invention. In Fig. 2, the system 1 is provided with a first air discharge system 34 and a second air discharge system 36. In this example, the first air discharge system 34 comprises a plurality of first suction openings 30.i and the second air discharge system 36 comprises a plurality of second suction openings 32.i. In this example, the first and second air discharge system 34,36 comprise one first suction opening 30.i and one second suction opening 32.i, respectively, per shelf 6.i. In this example, the first air discharge system 34 is provided with a third standpipe 38 and the second air discharge system 36 is provided with a fourth standpipe 40. The third standpipe 38 discharges the first return air flow 42, in this example to the plenum 46 located above the ceiling 44. The fourth standpipe 40 discharges the second return air flow 48, in this example also to the plenum 46. It will be clear that the third and/or fourth standpipe may also be connected with a pumping system for discharging the return air flows.

Fig. 2 shows that the first air discharge system 34 is located on a side of the holder 2 located opposite the side on which the first air supply apparatus 10 is located. Thus, the first air flows 24.i will efficiently flow through the holder 2 from the first air supply apparatus 10 to the first air discharge system 34. Likewise, the second air discharge system 36 is located on a side of the holder 2 located opposite the side on which the second air supply apparatus 12 is located. Thus, the second air flows 28.i will efficiently flow through the holder 2 from the second air supply apparatus 12 to the second air discharge system 36.

It will be clear that, in the example of Fig. 2, the return air flows 42, 48 are also discharged in an upward direction. As discussed with reference to Fig. 1, this can offer the advantage that drying differences in vertical direction can be minimized.

It will be clear that, in the example of Fig. 2, the air supply system 3 is separated from the air discharge systems 34,36. Air exposed to the cheeses, such as in the air flows 24.i and 28.i, will therefore be discharged via the separate air discharge systems 34,36, and not enter the air supply system 3. This reduces the risk of contamination of the air supply system 3.

In Fig. 2, the third standpipe 38 and the second standpipe 18 are schematically shown to be offset with respect to each other in the plane of the drawing. It will be clear that the third standpipe 38 and the second standpipe 18 may, in addition to or instead thereof, also be offset with respect to each other transversely to the plane of the drawing. It will further be clear that the second and the third standpipe may also be connected to, for instance, form a joint column. Preferably, here, separate channels are provided for supplied air and return air. *Mutatis mutandis,* the same holds for the first and the fourth standpipe.

In the example of Fig. 2, the air system 3 is further provided with a valve 50. The first air supply apparatus 10 and the second air supply apparatus 12 are each connected with the valve 50. In this example, a main flow 52 is supplied to the valve. The valve 50 may be controlled such, for instance by control means of the system (not shown), that, during the first period, air is only allowed through to the first air supply apparatus 10 and, during the second period, air is only allowed through to the second air supply apparatus 12. The advantage of using the valve 50 is that one air conditioning/control unit is sufficient for generating the first and the second main air flow.

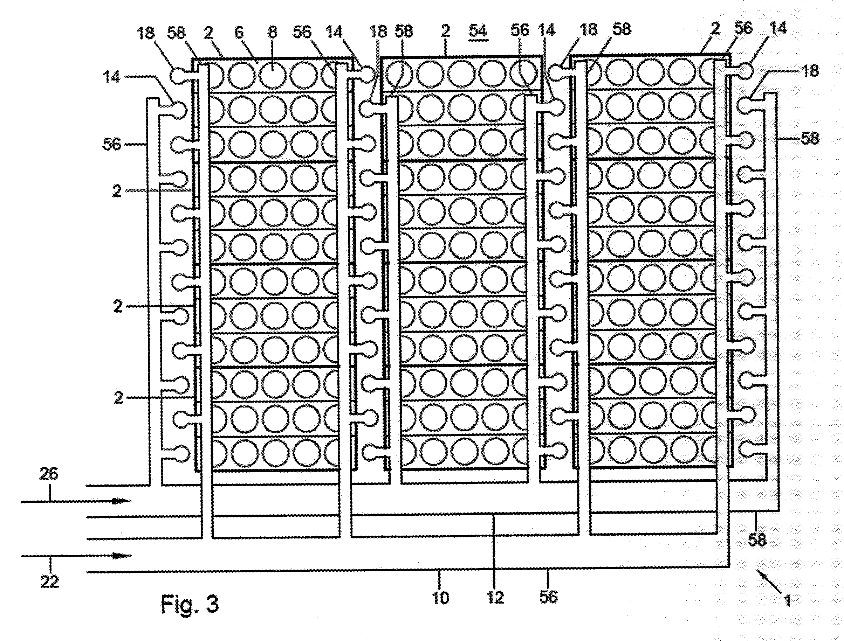

Fig. 3 shows a schematic top plan view of a third embodiment of the system 1 according to the invention. In the example of Fig. 3, the system 1 is implemented in a cheese warehouse 54. Fig. 3 shows a plurality of movable holders 2. In this example, all holders 2 are designed as cheese boxes (shown in bold lines). In this example, each holder 2 comprises a plurality of shelf layers, and three shelves 6 per shelf layer and five cheeses 8 on each shelf. The cheese warehouse 54 shown in Fig. 3 therefore comprises the plurality of cheeses. In this example, each holder 2 comprises the plurality of shelves 6 and, in this example, each shelf 6 comprises the number of cheeses 8.

In Fig. 3, the system 1 comprises the first air supply apparatus 10 and the second air supply apparatus 12. The first air supply apparatus 10 comprises first connecting channels 56. In this example, the first air supply apparatus 10 further comprises a plurality of first standpipes 14. The first connecting channels 56 distribute, at least during the first period, the first main air flow 22 over the first standpipes 14. The second air supply apparatus 12 comprises second connecting channels 58. In this example, the second air supply apparatus 12 further comprises a plurality of second standpipes 18. The second connecting channels 58 distribute, at least during the second period, the second main air flow 26 over the second standpipes 18.

In the example of Fig. 3, the standpipes 14,18 comprise one outlet opening per shelf, as described with reference to Fig. 1. In the example of Fig. 3, three rows of holders 2 are shown. It will be clear that, in this example, the standpipes 14,18 are placed between two rows of holders, comprise both outlet openings directed to the holder placed left of the standpipes in Fig. 3 and outlet openings directed to the holder placed right of the standpipes in Fig. 3.

In the example of Fig. 3, a first standpipe 14 is located on a first end of each shelf 6 and a second standpipe 18 on an opposite second end of each shelf 6. In the example of Fig. 3, further, along a plurality of adjacent shelves, the first and second standpipes are alternately placed. Thus, the air flow direction on a shelf is directed oppositely to the air flow direction on an adjacent shelf. It will be clear that, in this example, with a plurality of shelves placed next to one another, in a direction transverse to the longitudinal direction of the shelves, the air flow directions directed in the longitudinal direction of the shelves are oppositely directed on adjacent shelves. Without wishing to be bound to any theory, this creates an air flow pattern around the cheeses which yields a very homogenous drying, so that the differences in drying between individual cheeses of the plurality of cheeses are reduced further.

It will be clear that the system shown in Fig. 3 may comprise an air discharge system or air discharge systems as shown in Figs. 1 and/or 2.

The invention is by no means limited to the above-described embodiments. In the examples, the air supply systems 10,12 are separated from the air discharge systems 34,36. This means that air which has flowed along the number of cheeses does not enter the air supply systems 10,12, but is discharged via the separate air discharge systems. This reduces the risk of contamination of the air supply systems. In a special embodiment, during the first period, the first main air flow 22 is supplied to the first air supply apparatus 10 and further a first secondary air flow is supplied to the second air supply apparatus. Here, a flow rate and/or speed of the first secondary air flow is much smaller than the flow rate and/or speed of the first main air flow. The first secondary air flow thus ensures that a residual air emission continues to flow from the otherwise inoperative second air supply apparatus. A flow rate and/or flow speed of the first secondary air flow is then preferably sufficiently small to ensure that the first air flows 24 are not, at least hardly, disturbed by the first secondary air flow. A flow rate and/or flow speed of the first secondary air flow is then sufficiently great to prevent air which has flowed along the number of cheeses from entering the second air supply apparatus. Thus, the risk that air which has flowed along the number of cheeses enters the second air supply apparatus is obviated, at least reduced further. Likewise, during the second period, a second secondary air flow can be supplied to the first air supply apparatus.

In the examples, the cheeses are exposed to the first air flow during the first period and to the second air flow during the second period. It will be clear that it is also possible that the flow direction of air to which the cheeses are exposed is varied in time in another manner. For instance, it is possible that the outflow openings vary the flow direction of the air flowing therefrom in time. It is also possible that the flow rate of the first and the second main air flow is, for instance, periodically varied. Here, the flow rate of the second main air flow may, for instance, be in opposite phase with respect to the flow rate of the first main air flow. All this may, for instance, be realized in a simple manner by suitable control of a valve as shown in Fig. 2.

In the examples, the first and the second air flow are each directed in a longitudinal direction of the shelf, in the direction in which the row of cheeses extends on the shelf, i.e. from the first end of the shelf to the second end or in the opposite direction. It will be clear that it is also possible that the first and second air flow have a different orientation. The first and the second air flow may, for instance, be directed in a direction transverse to the longitudinal direction of the shelf, substantially parallel to the surface of the shelf on which the cheeses are. Thus, for instance, within one movable holder, or within a plurality of holders placed next to one another, the first or second air flow will successively pass cheeses on shelves placed next to one another. It will further be clear that it is possible that the first and the second air flow are not oppositely directed. For instance, it is possible that the first air flow is directed transversely to the second air flow.

In the examples, the cheeses are successively, for instance alternately, exposed to the first and the second air flow. It will be clear that it is also possible that the cheeses are successively, for instance in a cycle, exposed to more than two air flows whose orientations mutually differ.

In the examples, the first and second standpipes comprise one outflow opening per shelf. It will be clear that it is also possible that the first and second standpipes comprise a plurality of outflow openings per shelf. The outflow openings of the plurality of outflow openings may, for instance, be offset with respect to one another in horizontal and/or vertical direction. It is also possible that outflow openings of the plurality of outflow openings mutually differ. For instance, a cross section of the outflow openings may increase or decrease in vertical and/or horizontal direction.

It will be clear that the shelf referred to herein is not limited to a wooden support. The shelf may be any support for at least one cheese, such as for instance a plate, grid and/or bracket, for instance from wood, metal and/or plastic.

Such variants are each considered to fall within the framework of the invention. In the claims, the term "comprising" does not exclude the presence of other elements or steps other than those referred to in the claim. Further, the word "one" will not be understood to be limited to "only one", but will instead be used to mean "at least one" and will not exclude a plurality. The fact that particular measures are referred to in mutually different claims does not indicate that a combination of these measures cannot be used with advantage.

## Claims

1. A method for drying a plurality of cheeses, comprising:
supplying an air flow to the plurality of cheeses by means of an air supply system, wherein a flow direction of the air flow varies in time during drying of the plurality of cheeses and
discharging the air flow exposed to the cheeses via an air discharge system which is separated from the air supply system.

2. A method according to claim 1, comprising
exposing the plurality of cheeses to a first air flow during a first period;
exposing the plurality of cheeses to a second air flow during a second period, wherein the second air flow has an orientation which differs from, for instance is directed substantially oppositely to, an orientation of the first air flow.

3. A method according to any one of claims 1 or 2, wherein the plurality of cheeses are alternately exposed to the first and the second air flow.

4. A method according to any one of the preceding claims, wherein the plurality of cheeses are received in a movable holder, which is, for instance, substantially free of front, rear and side walls.

5. A method according to any one of the preceding claims, wherein the plurality of cheeses are placed on a plurality of shelves placed below one another and/or next to one another, further comprising supplying, per shelf, an air flow whose flow direction varies in time.

6. A method according to claim 5, wherein, in a row of shelves placed below one another, the flow direction of the air per shelf is, at any moment, substantially equal.

7. A method according to claim 5 or 6, wherein, in a row of shelves placed next to one another, a flow direction of the air is, at any moment, substantially opposite on adjacent shelves.

8. A method according to any one of the preceding claims, wherein the air flow exposed to the cheeses is discharged in an upward direction, and/or at a point which is located vertically higher than the cheeses.

9. A system for drying a plurality of cheeses, comprising
at least one shelf for placing the plurality of cheeses thereon, and an air supply system for supplying an air flow to the plurality of cheeses,
wherein the air supply system is arranged for supplying the air flow of which a flow direction varies in time during the drying of the plurality of cheeses,
wherein the system is further provided with an air discharge system for discharging air supplied to the plurality of cheeses, which is separated from the air supply system.

10. A system according to claim 9, wherein the air supply system is arranged for discharging air in an upward direction and/or at a point located vertically higher than the cheeses.

11. A system according to claim 9 or 10, wherein the air discharge system comprises a space at an underpressure, provided with at least one opening for discharging air which has flowed along at least one cheese therethrough to the space.

12. A system according to claim 11, wherein the air discharge system is further provided with at least one discharge channel for discharging air which has flowed along at least one cheese via the at least one discharge channel to the space.

13. A system according to any one of claims 9-12, wherein the air supply system comprises a first air supply apparatus and a second air supply apparatus,
wherein the first air supply apparatus is arranged for supplying a first air flow, and the second air supply apparatus is arranged for supplying a second air flow, wherein an orientation of the second air flow is different from an orientation of the first air flow,
wherein the system is arranged to be used in a first or second operative condition,
wherein the system is arranged for, in first operative condition, supplying the first air flow to the plurality of cheeses by means of the first air supply apparatus and, in the second operative condition, supplying the second air flow to the plurality of cheeses by means of the second air supply apparatus.

14. A system according to claim 13, wherein the air supply system is arranged for discharging the first air flow, and wherein the system is provided with a further air discharge system which is arranged for discharging the second air flow.

15. A system according to claim 13 or 14, wherein the first air flow is directed substantially oppositely to the second air flow.

16. A system according to any one of claims 13-15, wherein the plurality of cheeses are alternately exposed to the first and the second air flow.

17. A system according to any one of claims 9-16, wherein the shelf is part of a movable holder, which is, for instance, substantially free of front, rear and side walls.

18. A system according to any one of claims 13-16 and claim 17, wherein the first air supply apparatus is located on a first side of the shelf, and the second air supply apparatus is located on a second side of the shelf located opposite the first side.

19. A system according to any one of claims 13-16 and claim 17 or 18,
wherein the first and/or second air supply apparatus comprises a plurality of outflow openings for generating a plurality of first and/or second air flows, respectively.

20. A system according to any one of claims 9-19, wherein the system comprises a plurality of shelves placed below one another and/or next to one another.

21. A system according to claims 13 and 20, wherein the first and/or second air supply apparatus is provided with at least one outflow opening per shelf.

22. A system according to claim 20 or 21, wherein, in a row of shelves placed below one another, a flow direction of the air is, at any moment, substantially equal per shelf.

23. A system according to any one of claims 20-22, wherein, in a row of shelves placed next to one another, a flow direction of the air is, at any moment, substantially opposite on adjacent shelves.

24. A system according to any one of claims 9-23, wherein the system is provided with control means for controlling the air supply system.

25. An air supply system of the system according to any one of claims 9-24.
